# EUROPÄISCHE PATENTANMELDUNG

(11) **EP 4 686 933 A2**
(43) Veröffentlichungstag der Anmeldung: **04.02.2026**
(21) Anmeldenummer: 25189846.6
(22) Anmeldetag: 16.07.2025
(51) Int. Cl.: G01N 21/65, G01N 21/85, G01N 33/00, G01J 3/02, G01J 3/44, A61B 6/42

(54) **MESSEINRICHTUNG FÜR EINE KONZENTRATIONSMESSUNG EINES GASES UND EINES SPURENGASES MITTELS RAMAN-SPEKTROSKOPIE**

(30) Priorität: 29.07.2024 DE 102024207085; 10.10.2024 DE 102024209886
(71) Anmelder: Robert Bosch GmbH, 70442 Stuttgart (DE)
(72) Erfinder: Stratmann, Alexander, 70469 Stuttgart (DE); Schneider, Jens, 71229 Leonberg (DE)

(57) **Zusammenfassung**

Beschrieben wird eine Messeinrichtung (10) für eine Konzentrationsmessung eines Gases (22) oder eines Gasgemischs (24) mit einer Raman-Spektroskopieeinrichtung (30) mit mindestens einem Gasvermessungsraum (20, 56) für das Gas (22) oder das Gasgemisch (24), der ein oder mehrere optische Zugänge (28) und ein oder mehrere optische Ausgänge (30) aufweist, mit einer Gaszufuhrleitung (4) zur kontinuierlichen Zuführung von Messgas zu dem Gasvermessungsraum (20, 56) während der Konzentrationsmessung zum Zuführen des Gases (22) oder Gasgemisches (24) in den Gasvermessungsraum (20, 56), wobei diese Raman-Spektroskopieeinrichtung (30) eine leistungsstarke, kohärente und monochrome Lichtquelle (14), insbesondere eine Laserdiode (16), umfasst, welche zur fokussierten Beleuchtung des Gases (22) oder des Gasgemisches (24) in dem mindestens einen Gasvermessungsraum (20, 56) ausgebildet ist. Wesentlich ist dabei, dass die Messeinrichtung (10) zum Messen der Konzentration eines Spurengases (1) eine separate Spurengasmesseinrichtung (2) zum Messen von wenigstens einem Spurengas (1) aufweist.

## Beschreibung

### Technisches Gebiet

Die Erfindung bezieht sich auf eine Messeinrichtung für eine Konzentrationsmessung und/oder eine quantitative Konzentrationsauswertung eines Gases oder eines Gasgemischs mittels Raman-Spektroskopie, mit mindestens einem Gasvermessungsraum für das Gas oder das Gasgemisch oder das Spurengas. Des Weiteren bezieht sich die Erfindung auf ein Verfahren zur Messung einer Konzentration und/oder auf eine quantitative Konzentrationsauswertung eines Gases oder eines Gasgemischs oder eines Spurengases mittels Raman-Spektroskopie sowie auf die Verwendung der Messeinrichtung und/oder des Verfahrens.

### Stand der Technik

Stand der Technik aus dem Bereich der Raman-Spektroskopie ist bekannt aus der DE 10 2021 107 229 A1 und
aus der Norm ISO 23978 First Edition 2020-09 mit dem Titel "Natural gas - Upstream area - Determination of composition by Laser Raman spectroscopy".

Raman-Spektroskopie ermöglicht prinzipiell auch Infrarot inaktive Gase (z.B. Stickstoff N2 mit symmetrischer Streckschwingung) zu detektieren.

Voraussetzung dafür ist allerdings eine leistungsstarke Lichtquelle zur Anregung des Messgases. Hierzu kann beispielsweise kohärentes Licht mit einer Wellenlänge zwischen 400nm und 500nm eingesetzt werden. Ein Teil des eingebrachten Lichts wird an den Molekülen des zu messenden Gases inelastisch gestreut. Dabei entsteht eine Stokes- und Antistokes-Strahlung, die gegenüber der Anregungsstrahlung eine veränderte Wellenlänge aufweist. Nach Abblenden des Hauptteils der Anregungsstrahlung (Raleigh-Strahlung) kann die vergleichsweise schwache Antwortstrahlung (Stokes-/Anti-Stokes-Strahlung) mittels eines empfindlichen Spektrometer detektiert werden.

### Darstellung der Erfindung

Erfindungsgemäß wird eine Messeinrichtung für eine Konzentrationsmessung eines Gases oder eines Gasgemischs mit einer Raman-Spektroskopieeinrichtung mit mindestens einem Gasvermessungsraum für das Gas oder das Gasgemisch, der ein oder mehrere optische Zugänge und ein oder mehrere optische Ausgänge aufweist, mit einer Gaszufuhrleitung zur kontinuierlichen Zuführung von Messgas zu dem Gasvermessungsraum während der Konzentrationsmessung zum Zuführen des Gases oder Gasgemisches in den Gasvermessungsraum beansprucht, wobei diese Raman-Spektroskopieeinrichtung einen Hochleistungslaser, insbesondere eine Laserdiode umfasst, welcher zur fokussierten Beleuchtung des Gases oder des Gasgemisches in dem mindestens einen Gasvermessungsraum ausgebildet ist und wobei die Raman-Spektroskopieeinrichtung Raman-Streulicht durch ein sammelndes optisches System mit Filtern und Blenden einer spektralen Analyseeinheit zuführt, wobei die Messeinrichtung insbesondere zum Messen von diatomigen Infrarot-inaktiven Gasen ausgebildet ist, bei der die Messeinrichtung eine separate Spurengasmesseinrichtung zum Messen von wenigstens einem Spurengas aufweist.

Die separate Spurengasmesseinrichtung ist dabei als separater Baustein ausgebildet, wobei dieser Baustein flexibel in die Messeinrichtung integrierbar bzw. beliebig ein- und ausbaubar ist.

Wesentlich für die Erfindung ist es, dass dieser separate Baustein zur Spurengasmessung auf spektral-optischen, insbesondere aber auch auf nicht-optischen Funktionsprinzipien basieren kann.

Für den Nachweis von bestimmten Spurengasen im ppm-Bereich haben sich auf aufgrund Ihrer Selektivität, ihrer Empfindlichkeit und ihrer niedrigen Kosten besonders elektrochemische Sensoren (Redox-Reaktionen an Elektroden mit selektiver katalytischer Aktivität) und resistive Sensoren (selektive Adsorption an MOx / Halbleiter-Oberflächen mit einhergehender Veränderung der Impedanz) bewährt. Sensoren mit diesen Funktionsprinzipien sind bekannt und kommerziell erhältlich. Sie werden als "stand alone"-Sensoren oder integriert in Systeme wie Klimaanlagen oder Feuermelder angeboten.

Die Bereitstellung dieser Sensoren in einem auswechselbaren Baustein, der mechanisch in die Gaszufuhr des Spektrometers integriert ist und dessen Daten-Output in einer gemeinsamen SCU (= Spektrometer Control Unit) mit den Raman-Messungen verarbeitet werden (= Auswertung, Plausibilisierung, Speicherung, Ausgabe) ist ein wesentlicher Kern der vorliegenden Erfindung.

Die Bereitstellung dieser Sensoren in einem auswechselbaren Baustein ermöglicht auch den Einsatz von (meist kostengünstigen) Spurengas-Detektoren mit begrenzter Laufzeit. Beispielsweise von MOX / MOS Sensoren, die sich nur wenige Male regenerieren lassen, bis die Zuverlässigkeitsgrenze erreicht ist. Prinzipbedingt lässt dieses Wechselkonzept sogar Spurengasdetektoren zu, die nur einmal genutzt werden können und dann ausgewechselt werden müssen, z.B. Sensoren, die mittels irreversibler Chemisorption des nachzuweisenden Spurengases funktionieren.

Weiterhin ist vorteilhaft, dass es durch die erfindungsgemäße Lösung ermöglicht ist, die Messeinrichtung anwendungsspezifisch zu konstruieren.

So ist es durch die erfindungsgemäße Lösung beispielsweise ermöglicht, bei der Gaszufuhr zu Brennstoffzellen kleine Mengen an Schwefelverbindungen im zugeführten Gas zu detektieren. Dies geschieht vorteilhafterweise mittels eines Bausteins basierend auf einem Chemolumineszenz-Messprinzip

Ebenso ist es durch die erfindungsgemäße Lösung ermöglicht, bei der Gaszufuhr zu Brennstoffzellen kleine Mengen an Kohlenmonoxid (CO) im zugeführten Gas zu detektieren. Dieser Anwendungsfall ist aufgrund der Eigenschaften von Kohlenmonoxid (Toxizität, Katalysatorgift, ...) besonders relevant.

Dies geschieht vorteilhafterweise mittels eines Sensors basierend auf einem elektrochemischem Messprinzip, z.B. einem Mischpotential-Sensor oder eines resistiven MOS/MOX Halbleiter-Sensor oder eines "catalytic-bead"-Sensors, die alle kleinbauend und kostengünstig speziell für die Detektion von Kohlenmonoxid angeboten werden und erfindungsgemäß als Baustein zur Integration in das optische Spektrometer bereitgestellt werden können.

Ebenso ist es durch die erfindungsgemäße Lösung ermöglicht, in Erdgas bzw. CNG (compressed natural gas) aber auch z.B. in der Umgebungsluft sehr geringe Mengen von Begleitverbindungen wie z.B. Olefine oder PAKs (Polyaromatische Kohlenwasserstoffe) zu erkennen. Dies geschieht vorteilhafterweise mittels eines Bausteins basierend auf einem Fluoreszenz Messprinzip - Pause

PAK, insbesondere Benzopyren, sind karzinogen, weshalb eine Detektion dieser Stoffe von besonderer Bedeutung im Hinblick auf Gesundheit und Sicherheitsbestimmungen ist. PAK kommen als kritische Komponente in der Umgebungsluft, in Rauchgasen und in Erdgas lediglich in Spuren vor, also in sehr geringer Konzentration, weshalb es im Allgemeinen nicht möglich ist, diese mit einem Raman-Spektrometer allein zu messen. Werden PAK in einer Erdgasfraktion detektiert, so lässt sich beispielsweise auf dieser Basis auf den Zustand der Erdgasquelle schließen.

Im letztgenannten Beispiel ist es denkbar, dass die erfindungsgemäß vorgeschlagene separate Spurengasmesseinrichtung in Form eines Fluoreszenz-Anregung-Detektor-Bausteins zur Integration in die erfindungsgemäße Messeinrichtung ausgebildet ist. Dabei handelt es sich um ein adaptiertes, stark vereinfachtes Fluoreszenz-Spektroskopieverfahren für die In-Line Detektion von PAK in Gasphase. Das Gas wird bei diesem Verfahren beispielsweise durch einen quarz- oder korund-optischen Gasvermessungsraum geleitet und mit Licht im Ultraviolett-Bereich bestrahlt und damit angeregt. Es ist denkbar, dass die Messzelle beheizbar ausgeführt ist. Zum Bestrahlen des Gases kann eine Ultraviolett-LED verwendet werden, die bevorzugten Wellenlängen der hierzu verwendeten Anregungsquellen sind insbesondere 265nm, 300nm, 365nm und 395nm.

Üblicherweise werden die wellenlängen-verschobenen Fluoreszenzantworten, insbesondere bei Anwesenheit von mehr als 1,0 ppm PAK mit einem Photodetektor-Array, z.B. einem CCD oder CMOS erfasst.

Der für den Kern der Erfindung wesentliche Aspekt ist die prinzipbedingte frühzeitige Erkennung der Anwesenheit von kritischen Spurengasen durch den integrierten Baustein. Im Falle eines Ansprechens des Detektor-Bausteins kann eine detaillierte Identifizierung und Differenzierung der vorhandenen PAK nachgeschaltet werden, d.h. "ex-line" durch eine zusätzliche Analytik erfolgen.

Beispielsweise bei der Versorgung einer Brennstoffzelle kommen hauptsächlich Gase zum Einsatz welche im infraroten Spektralbereich inaktiv sind, insbesondere O2 aus der Umgebungsluft im Gemisch mit einem Überschuss aus N2 und in separater Zufuhr H2 als Energieträger. Zusammen mit diesen Gasen können potenziell auch Spurengase mit für die Brennstoffzelle kritischen Eigenschaften zugeführt werden. Diese könnten die Brennstoffzelle bei unbeabsichtigter Zuführung schädigen.

Vorteilhafterweise ermöglicht es die vorliegende Erfindung, beispielsweise eine quantitative kontinuierliche Erfassung der größtenteils IR-inaktiven Gase in einer Produktionslinie durchzuführen und gleichzeitig auch die Spurengase, welche kritische Eigenschaften für die Brennstoffzelle aufweisen, zu detektieren.

Die Brennstoffzelle besonders schädigende Spurengase sind beispielsweise Schwefelwasserstoff, Phosphorwasserstoff oder Kohlenmonoxid. Diese Auflistung ist nicht als abschließend zu verstehen. Die Erfindung beschränkt sich auch nicht auf den Anwendungsfall Brennstoffzelle. Die erfindungsgemäße Messeinrichtung kann nämlich auch für andere Spurengase als die vorangehend und nachfolgend beispielhaft genannten konfiguriert werden. Weitere Beispiele für solche Spurengase, zum Beispiel in reduzierender Atmosphäre, sind: HCN, NH3, Alkene, Acetylen, Acrolein, Ammoniak, flüchtige Amine, flüchtige Bor- oder Silizium-Verbindungen. Beispiele für solche Spurengase, beispielsweise in oxidierender Atmosphäre, sind: Schwefeldioxid/-trioxid, Phosphorpentoxid, Halogene, Chlordioxid, NO2, Ozon.

Der Gasvermessungsraum ist zum Hindurchfließen des zu untersuchenden Gases ausgebildet. Die Messung erfolgt erfindungsgemäß beim kontinuierlichen Hindurchfließen des zu untersuchenden Gases durch den Gasvermessungsraum. Dies bedeutet, dass keine Probenextraktion mit anschließender, teilweise räumlich getrennter Offline-Analyse erforderlich ist, wie sie beispielsweise im Bereich der Gaschromatographie angewendet wird.

Das Raman-Messsignal ist prinzipbedingt streng linear zur Molekülkonzentration im Gas oder Gasgemisch (Raman-Signal ~N/V). Die Intensitäten der einzelnen Raman-Linien sind zueinander in einem konstanten Verhältnis, was bedeutet, dass Gaskonzentrationen über einen vollständigen Messbereich bestimmt werden können, also nicht nur über Teilbereiche von beispielsweise 0 % bis 20 %, wie es bei den klassischen Gassensoren in der Regel üblich ist. Ferner ist bei der erfindungsgemäß vorgeschlagenen Messeinrichtung eine Kalibrierung nur an einer Gaskonzentration eines Gases erforderlich, so zum Beispiel direkt an der Umgebungsluft mit 78 Vol.-% Stickstoff durchzuführen. Es sind also weder die sonst übliche Zweipunktkalibrierung bei Sensoren im linearen beziehungsweise im ausreichend linearen Teilbereich noch eine Mehrpunktkalibrierung bei den üblicherweise nicht-linearen Sensoren, zum Beispiel durch eine logarithmische Kalibrierkurve bei Wasserstoffsensoren noch anhand einer Sondergasmischung vorzunehmen. Das Raman-Signal ist außerdem direkt proportional zur Leistung des erfindungsgemäß vorgesehenen Hochleistungslasers.

Für sehr hohe quantitative Messgenauigkeiten, insbesondere in kleinen Konzentrationsbereichen, kann neben einem Gasvermessungsraum ein weiterer Gasvermessungsraum zum Einsatz kommen, der nachfolgend als Kalibrierzelle bezeichnet wird. Der aus dem eigentlichen Gasvermessungsraum ausgekoppelte Laserstrahl wird mit einer geeigneten Optik in die Kalibrierzelle geleitet, in der eine bekannte Gaskonzentration, vorzugsweise 100 % Stickstoff vorliegt, und dann weiter einem Strahlabsorber zugeführt. Das in der Kalibrierzelle entstehende Raman-Streulicht wird zusätzlich, beispielsweise über eine Raman-Intensität-verstärkende Optik, auf den Lichtdetektor geleitet und vermessen. Hier kann je nach Anwendungsfall eine parallele Vermessung eines sich nicht im Gasstrom befindlichen Gases erfolgen. Ein Anwendungsfall für besonders hohe Messgenauigkeit ist, dass die Messung des zu vermessenden Gases sowohl in der Kalibrierzelle als auch im herkömmlichen Gasvermessungsraum erfolgt.

In vorteilhafter Ausgestaltung ist vorgesehen, dass das Gas in einer Gasflussrichtung in den Gasvermessungsraum eintritt und
dass die Spurengasmesseinrichtung der Raman-Spektroskopieeinrichtung in Gasflussrichtung vorgeschaltet ist. In diesem Fall kann von einer seriellen Messgaszuleitung gesprochen werden. Diese Aufbauart kann sich als vorteilhaft herausstellen, da in diesem Fall eventuell im Gas vorhandenes Spurengas gemessen werden kann, bevor die Raman-Spektroskopie durchgeführt wird.

In einer weiteren vorteilhaften Ausführungsvariante ist die Messeinrichtung derart ausgestaltet, dass die Spurengasmesseinrichtung separat von der Raman-Spektroskopieeinrichtung anströmbar ist. Dadurch ist es ermöglicht, das Gas durch Anströmen von lediglich der Spurengasmesseinrichtung nur auf Spurengase zu untersuchen, ohne gleichzeitig eine zeitintensivere Raman-Spektroskopie durchzuführen. Weiterhin ist es durch diese Ausgestaltungsform der erfindungsgemäßen Lösung ermöglicht, dass Messungen unabhängig voneinander erfolgen können.

In einer weiteren vorteilhaften Ausgestaltungsform ist die Messeinrichtung derart ausgestaltet, dass die Spurengasmesseinrichtung und die Raman-Spektroskopieeinrichtung in Gasflussrichtung parallel angeordnet sind. Durch diesen Aufbau ist es wie oben beschrieben möglich, lediglich die Spurengasmesseinrichtung anzuströmen bzw. lediglich das Spurengas zu messen. Besonders vorteilhaft an dieser Ausgestaltungsform ist, dass durch die parallele Anordnung eine kompaktere Bauweise der Messeinrichtung ermöglicht ist.

Alternativ oder zusätzlich kann vorgesehen sein, dass die Spurengasmesseinrichtung zum Unterscheiden von Kohlenwasserstoffen ausgebildet ist. Es ist insbesondere vorteilhaft, dass die Spurengasmesseinrichtung zum Unterscheiden von aliphatischen und aromatischen Kohlenwasserstoffen ausgebildet ist. Besonders das Vorhandensein von Benzol oder kondensierten Polyaromaten in einem Gasgemisch mit aliphatischen Kohlenwasserstoff-anteilen (z.B. Methan) oder Alkoholen (z.B. Methanol) soll erkannt werden.

Es ist insbesondere vorteilhaft vorgesehen, dass die Messeinrichtung eine Aktorik zum Abstellen der Gaszufuhr und/oder eine Aktorik zum Anzeigen einer Warnung auf einer Leuchtanzeige bei Überschreiten eines kritischen Schwellenwertes des wenigstens einen Spurengases aufweist. Bei der Aktorik zum Abstellen der Gaszufuhr kann es sich um einen kompakt verbauten Elektromotor handeln, der zum Abstellen der Gaszufuhr ein Ventil schließt.

Bei der Aktorik zum Anzeigen einer Warnung bei Überschreiten eines kritischen Schwellenwertes des Spurengases kann es sich um ein elektrisches Signal handeln. Bei der Leuchtanzeige handelt es sich vorzugsweise um ein handelsübliches LCD in einem robustem Gehäuse, wobei das Display und die Aktorik leitend miteinander verbunden sind.

Vorteilhaft kann vorgesehen sein, dass die Messeinrichtung eine Aktorik zum Abstellen der Gaszufuhr und/oder eine Aktorik zum Anzeigen einer Warnung auf einer Leuchtanzeige bei Detektion einer vorbestimmten Änderung des Gases aufweist. Dies ist sinnvoll, da bei Detektion einer vorbestimmten Änderung des Gases im laufenden Prozess ohne Zeitverlust reagiert werden kann. Es ist beispielsweise denkbar, dass bei Erreichen einer bestimmten Änderung des Gases ein überwachter Prozess z.B. durch eine Ventilregelung beendet wird.

In einer weiteren Ausgestaltung der erfindungsgemäßen Lösung ist vorgesehen, dass die Messeinrichtung eine Auswerteeinheit zum Plausibilisieren und/oder Umschalten und/oder Korrigieren aufweist, die die Daten der beiden Messvorgänge zusammenführt: a) Raman-Spektroskopie Messdaten und b) Messdaten des Spurengas-Detektor-Bausteins.

Durch den Einsatz einer oben beschriebenen zusammenführenden Auswerteeinheit ist eine erhöhte Effizienz bei der Auswertung und Nutzung der Messdaten ermöglicht. Da die Auswerteeinheit die Ergebnisse in einem laufenden Prozess plausibilisieren kann, entfällt ein separater Plausibilisierungsschritt. Die Messeinrichtung kann im Rahmen von gewissen Prozessen verwendet werden, wobei die oben erwähnten Gase, die mit der Messeinrichtung vermessen werden können, Gase sein können, die diesen Prozessen zugeführt werden können. Das Umschalten und/oder das Korrigieren kann ebenso in einem laufenden Prozess erfolgen, wodurch Prozessunterbrechungen vermieden und die Effizienz gesteigert werden kann.

Alternativ oder zusätzlich kann vorgesehen sein, dass die Messeinrichtung eine Regelungseinheit zum Auswählen unterschiedlicher Modi zum Messen des Schwellenwertes des wenigstens einem Spurengas aufweist. So ist es denkbar, dass vor dem Messprozess verschiedene Modi mit unterschiedlichen Charakteristika festgelegt werden und die Regelungseinheit feststellt, welcher Modi mit welchen Charakteristika am besten für den durchzuführenden Prozess geeignet ist, z.B. anhand von Kriterien wie das zu messende Spurengas, die Temperatur oder die Gesamtzusammensetzung des Gases.

Weiterhin ist es möglich, dass die Regelungseinheit dazu ausgebildet ist, die Modi anhand von prozessbedingten Änderungen der Gaszufuhr auszuwählen. Unter prozessbedingten Änderungen versteht man im Kontext der Anmeldung Änderungen, die während dem Messprozess auftreten und dem Durchführen des Prozesses geschuldet sind. Treten solche prozessbedingten Änderungen auf, so muss normalerweise auch der Modus geändert werden, da die zuvor getroffene Auswahl nun nicht mehr ideal ist. Durch die oben beschriebene Lösung kann während eines laufenden Prozesses flexibel auf prozessbedingte Änderungen reagiert werden. Dies ist vorteilhaft, da dadurch eine maximale Produktivität sichergestellt ist. Beispielsweise kann bei einem diskontinuierlichem Sinterprozess das Ende der Sinterfahrt oder der Atmosphärenwechsel von Reduktion zu Oxidation erkannt und genutzt werden, um die Messung der Konzentration eines Spurengas entweder zu aktivieren, umzuschalten oder zu deaktivieren.

Es ist darüber hinaus denkbar, dass die Regelungseinheit dazu ausgebildet ist, das Messen der Konzentration anhand einer Veränderung in der Zusammensetzung des Gases zu aktivieren oder deaktivieren. Dies ist vorteilhaft, da eine Veränderung der Zusammensetzung des Gases auch Veränderungen der Konzentration des wenigstens einen Spurengases bewirken kann, wodurch es vorteilhaft sein kann, die Konzentration des Spurengases erneut zu messen, also den Messvorgang zu aktivieren. Es ist auch denkbar, in diesem Fall den Messvorgang zu deaktivieren um diesen anschließend nochmal mit angepassten Parametern zu starten. Das Messen der Konzentration des Spurengases zu deaktivieren kann auch sinnvoll sein, um einmal ein Messergebnis vor Veränderung der Zusammensetzung des Gases erhalten möchte und anschließend ein zweites Messergebnis mit dem in der Zusammensetzung geänderten Gas durch erneutes Aktivieren des Messvorgangs zu erhalten.

In vorteilhafter Weiterbildung der erfindungsgemäßen Lösung weist die Messeinrichtung ein lernfähiges neuronales Netzwerk zum Messen des Schwellenwertes des wenigstens einen Spurengases auf. Dies ist vorteilhaft, da durch Einsatz von mittlerweile sehr hoch entwickelten lernfähigen neuronalen Netzwerken die Prozesseffizienz gesteigert werden kann.

Weiterhin kann vorgesehen sein, dass das lernfähige neuronale Netzwerk zum Unterscheiden von wenigstens zwei einander ähnlichen Spurengasen ausgebildet ist. In den meisten Prozessen, z.B. im Bereich der Brennstoffzelle ist im Gas mehr als ein Spurengas vorzufinden, häufig sind die Spurengase einander ähnlich. Man spricht voneinander ähnlichen Spurengasen, wenn diese sich in ihrem strukturellen Aufbau, in ihrer Einordnung im Periodensystem der Elemente und ihrem Reaktionsverhalten ähnlich sind. Beispiele hierfür sind z.B. Ammoniak und Amine die nebeneinander in Prozessgasen auftreten können, oder Schwefelwasserstoff und Mercaptane, die ebenfalls nebeneinander in gasförmigen Energieträgern (z.B. H2, Erdgas) auftreten können.

Vorteilhaft kann vorgesehen sein, dass das lernfähige neuronale Netzwerk zum Erkennen von Prozessveränderungen anhand der Unterschiede der wenigstens zwei einander ähnlichen Spurengasen oder eines Hauptgases und eines Spurengases in der Messgasmischung ausgebildet ist. Unter Prozessveränderungen versteht man hier Veränderungen, die im Zeitraum des Messprozess auftreten. Unter Unterschiede zwischen den einander ähnlichen Spurengasen versteht man im Kontext der Anmeldung Unterschiede in der chemischen Zusammensetzung und/oder dem Verhalten bei Temperaturänderung oder Druckänderung der einander ähnlichen Spurengase. Dies ist vorteilhaft, da dadurch Prozessänderungen erkennbar sind, die in dem durch den Gasvermessungsraum durchleitbaren Gasstrom noch nicht erkennbar sind, wodurch es ermöglicht ist, den Prozess, zum Beispiel eine Sinterung, schon frühzeitig an die jeweils aufgetretene Veränderung anzupassen. Es ist denkbar, dass das lernfähige neuronale Netzwerk einander ähnliche Spurengase anhand ihres strukturellen Aufbaus und/oder anhand ihrer Einordnung im Periodensystem der Elemente und/oder anhand ihres Reaktionsverhalten erkennt.

In einer weiteren vorteilhaften Weiterbildung der erfindungsgemäßen Lösung kann vorgesehen sein, dass das lernfähige neuronale Netzwerk zum Unterscheiden von verschiedenen Kohlenwasserstoffen bei Gasen in inerter und/oder oxidierender Atmosphäre ausgebildet ist. Unter Atmosphäre kann im erfindungsgemäßen Kontext entweder die Umgebungsluft oder bei der Spurengasmessung das Gas, das im Übrigen zugeführt wird, verstanden werden. Je nach Art des Gases liegt z.B. beim Betrieb einer Brennstoffzelle eine jeweils unterschiedliche Gefahrenlage für die Brennstoffzelle bzw. für die Umgebung vor. Dementsprechend ist es zweckmäßig, verschiedene Kohlenwasserstoffe zu unterscheiden. Kohlenmonoxid ist z.B. ein Katalysatorgift, das die Lebensdauer und die Leistung einer Brennstoffzelle beeinträchtigt und zugleich auch für Personen in der Umgebung eine Gefahr darstellt.

Vorteilhaft kann vorgesehen sein, dass die Messeinrichtung eine Kontrolleinrichtung zum Plausibilisieren der ermittelten Messdaten aufweist.

Ein Plausibilisieren der Messdaten kann z.B. anhand der ermittelten Temperatur, anhand der ermittelten Feuchtigkeit oder mittels Umgebungsdruckerfassung erfolgen. Dies ist vorteilhaft, da durch Plausibilisieren der Messdaten die Systemrobustheit des Spektrometers erhöht wird.

Weiterhin kann vorteilhaft vorgesehen sein, dass die Spurengasmesseinrichtung sensitiv auf eine Konzentration von 1 ppm Schwefel und/oder Phosphor und/oder Ammoniak und/oder flüchtiger primärer, sekundärer, tertiärer Amine und/oder freier Halogene und/oder Halogenoxide und/oder Ozon und/oder reduzierender Gase ist.

In weiterer Ausgestaltung der erfindungsgemäßen Lösung kann vorgesehen sein, dass die Spurengasmesseinrichtung als ein beta-Strahlungszähler ausgebildet ist. Mit der erfindungsgemäßen Lösung kann kontinuierlich die Zusammensetzung von Gasgemischen erfasst und quantitativ analysiert werden. Prinzipbedingt befindet sich die Detektionsuntergrenze eines Raman-Spektrometers für die meisten Verbindungen in der Gasphase bei Normaldruck im Bereich von 300 bis 500 ppm. Bei vielen Anwendungsfällen ist es jedoch sehr relevant, spezielle ausgewählte Spurengase in der Gasmischung schon ab einer Konzentration von >1.0 ppm sicher zu erkennen. Erfindungsgemäß wird vorzugsweise ein kleinbauender beta-Strahlungszähler mit hoher Empfindlichkeit verwendet. Vorteilhaft ist auch, dass man mit der erfindungsgemäßen Lösung sehr gut die verschiedenen Wasserstoff-Isotope, beispielsweise 1H Wasserstoff, 2H Deuterium oder 3H Tritium, detektieren und unterscheiden kann. Jedes Isotop gibt eine deutlich unterschiedliche Raman-Antwort bzw. die Stokes-Linien liegen bei sehr unterschiedlichen Wellenlängen. Allerdings ist die Detektionsuntergrenze bzw. die Nachweisgrenze mit Raman-Spektroskopie für alle drei Wasserstoff-Isotope wie oben ausgeführt bei >100ppm, so dass bei einem empfindlicheren Nachweis von 3H Tritium auf die Detektion der beta-Strahlung zurückgegriffen werden muss. Ein weiterer vorteilhafter Aspekt ist, dass der Detektor-Baustein je nach Applikationsanforderung gemäß dem Baukasten-Prinzip frei wählbar ist. So kann beispielsweise die Detektion von Tritium, das während des Betriebs eines Reaktors entsteht, forciert werden. Die erfindungsgemäße Lösung ist auch zur Detektion von weitere Spurengase geeignet, die wie Tritium Beta-Strahler sind und eine ionisierende Strahlung abgeben.

Weiterhin ist es denkbar, dass die Messeinrichtung eine mit dem beta-Strahlungszähler verbundene Sicherheitsaktorik aufweist, wobei bei Überschreiten der kritischen Konzentration eines Gasanteils mit Emission von beta-Strahlung die Sicherheitsaktorik ausgelöst wird. Dies kann beispielsweise mittels Alarm-LED oder mittels Unterbrechung der Gaszufuhr erfolgen.

Darüber hinaus bezieht sich die vorliegende Erfindung auf ein Verfahren zum Betreiben einer Messeinrichtung der vorhergehend beschriebenen Art.

Weiterhin umfasst die vorliegende Erfindung ein Verfahren zum Bereitstellen von Trainingsdaten für ein lernfähiges neuronales Netzwerk gemäß der vorhergehend beschriebenen Art.

Ferner bezieht sich die vorliegende Erfindung auf ein Messverfahren, insbesondere mit einer Messeinrichtung der vorhergehend beschriebenen Art, bei dem in einem ersten Schritt eine Grundkalibrierung der Messeinrichtung erfolgt,
bei dem in einem zweiten Schritt eine Nullgaskalibrierung, vorzugsweise mit Argon, erfolgt,
bei dem in einem dritten Schritt das Kalibriergasgemisch, vorzugsweise reiner Stickstoff, vermessen wird,
bei dem in einem vierten Schritt die Messeinrichtung zum Messen einer Gasmischung verwendet wird,
bei dem in einem fünften Schritt ein lernfähiges neuronales Netzwerk zum Ausgeben eines Ergebnisses des im vierten Schritt gemessenen Gasmischung zum Einsatz kommt.

Erfindungswesentlich ist dabei,
dass nach dem ersten Schritt eine Grundkalibrierung eines Spurengas-Detektors erfolgt,
dass nach dem zweiten Schritt eine Nullgaskalibrierung des Spurengasdetektors erfolgt,
dass sowohl nach dem dritten als auch nach dem vierten Schritt eine Signalauswertung des Spurengas-Detektors erfolgt.

Die Erfindung umfasst ferner ein Verfahren zum Betreiben einer Messeinrichtung, insbesondere ein Verfahren zum Betreiben einer Messeinrichtung bei einer Brennstoffzellenfertigung der vorhergehend beschriebenen Art.

Die Erfindung umfasst darüber hinaus ein Verfahren zum Bereitstellen von Trainingsdaten für ein lernfähiges neuronales Netzwerk der vorhergehend beschriebenen Art.

### Kurze Beschreibung der Zeichnung

Ausführungsformen der Erfindung werden anhand der Zeichnungen und der nachfolgenden Beschreibung näher erläutert.

Es zeigen:
- Figur 1: eine skizzenhafte Darstellung des Aufbaus einer Messeinrichtung gemäß dem Stand der Technik ohne Spurengasmesseinrichtung,
- Figuren 2: eine skizzenhafte Darstellung eines weiteren möglichen Aufbaus einer Messeinrichtung gemäß dem Stand der Technik ohne Spurengasmesseinrichtung,
- Figur 3: eine skizzenhafte Darstellung einer erfindungsgemäßen Messeinrichtung mit erfindungsgemäß vorgeschlagener Spurengasmesseinrichtung,
- Figur 4: eine alternative skizzenhafte Darstellung der erfindungsgemäßen Messeinrichtung mit erfindungsgemäß vorgeschlagener Spurengasmesseinrichtung

### Ausführungsformen der Erfindung

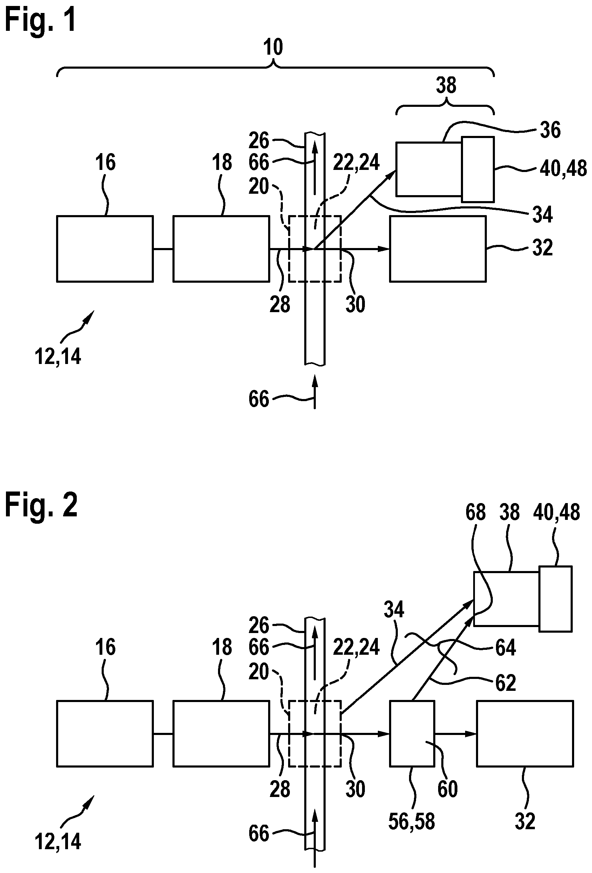

Figur 1 zeigt in schematischer Weise den Aufbau einer erfindungsgemäß vorgeschlagenen Raman-Spektroskopieeinrichtung. Diese umfasst als Strahlungsquelle 12 eine Laserlicht-Quelle 14, die kohärentes, monochromes Licht ausstrahlt, insbesondere mindestens eine Laserdiode 16. Diese wird innerhalb des sichtbaren Spektralbereichs, insbesondere innerhalb des blauen Spektralbereichs betrieben. Der Strahlungsquelle 12 gemäß der Darstellung in Figur 1 ist eine fokussierende Optik 18, die hier nur schematisch angedeutet ist, nachgeschaltet, die die Laserstrahlung, die durch die mindestens eine Laserdiode 16 erzeugt wird, auf einen Teil eines Gasvermessungsraums 20 fokussiert. Im Gasvermessungsraum 20 ist ein Gas 22 oder ein Gasgemisch 24 enthalten. Der Gasvermessungsraum 20 kann Teil einer Bypass-Leitung 26 sein, die von einem Gasstrom 66 durchströmt wird.

Der Gasvermessungsraum 20 umfasst mindestens einen optischen Zugang 28 sowie mindestens einen optischen Ausgang 30 für die durch die mindestens eine Laserdiode 16 erzeugte Laserstrahlung.

Aus der Darstellung gemäß Figur 1 geht des Weiteren hervor, dass aus dem mindestens einen optischen Ausgang 30 austretende Laserstrahlung in einen Strahlungsabsorber 32 gelangt, um Streulichteinflüsse zu vermeiden.

Aus dem Gasvermessungsraum 20 gelangt Raman-Streulicht 34 in eine Raman-Streuintensität-verstärkende Optik 36, wobei diese Optik 36 Teil einer spektralen Analyseeinheit 38 ist. Diese umfasst einen Spektrographen 40, der mindestens ein dispergierendes Element umfasst, welches beispielsweise als ein Gitter sowie mindestens ein Prisma ausgestaltet sein kann. Es können auch mehrere Gitter und mehrere Prismen vorgesehen sein sowie Kombinationen aus Gittern und Prismen. Die spektrale Analyseeinheit 38 umfasst daneben einen Lichtdetektor 48, beispielsweise in Gestalt einer CCD-Kamera 50 oder eines CMOS-Bauelements und/oder einer Anzahl von Empfängerdioden. Darüber hinaus besteht die Möglichkeit, dass innerhalb des Lichtdetektors 48 Empfängerdioden an den Stellen der Raman-Wellenlängen des/der zu untersuchenden Gase/s angeordnet sind. Durch eine geeignete Ausführung des Bypasses 26 oder die Nutzung optischer Fenster im Gasvermessungsraum 20 können somit auch Gase 22 oder Gasgemische 24 in verschiedenen Druck- und Temperaturbereichen vermessen werden.

Bei der in Figur 1 gestalteten Messeinrichtung 10 wird das zu vermessende Gas 22 mit der Laserdiode 16 vorzugsweise im sichtbaren blauen Spektralbereich durch eine fokussierende Optik 18 fokussiert beleuchtet. Durch die Raman-Streuintensität verstärkende Optik 36 wird das Raman-Streulicht 34 aufgenommen und der spektralen Analyseeinheit 38 zugeführt.

Gemäß der Darstellung nach Figur 2 ist eine Ausführungsvariante der im Zusammenhang mit Figur 1 bereits beschriebenen Raman-Spektroskopieeinrichtung zu entnehmen. Der Unterschied zwischen den in Figur 1 und Figur 2 dargestellten Ausführungsvarianten liegt in Bezug auf Figur 2 darin, dass in der Raman-Spektroskopieeinrichtung ein zusätzlicher weiterer Gasvermessungsraum 56 vorgesehen ist. Dieser dient vorzugsweise als Kalibrierzelle 58 und umfasst eine bekannte Gaskonzentration 60, so zum Beispiel 100 % N2.

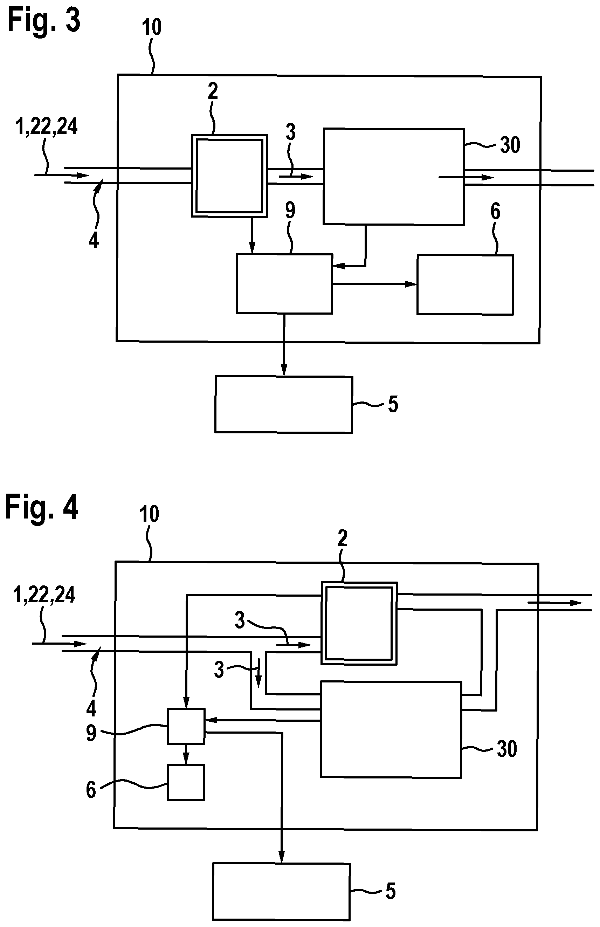

Die Figuren 1 und 2 zeigen eine Messeinrichtung 10 gemäß dem Stand der Technik. Figur 3 und Figur 4 zeigen nun den Aufbau einer erfindungsgemäßen Messeinrichtung, wobei der erfindungsgemäße Zusatz in Form der Addition einer Spurengasmesseinrichtung beispielsweise ausgehend von der in Figur 1 gezeigten Ausführungsform oder beispielsweise ausgehend von der in der in der Figur 2 gezeigten Ausführungsform erfolgen kann.

Die Figur 3 zeigt eine Messeinrichtung 10 für eine Konzentrationsmessung eines Gases 22 oder eines Gasgemischs 24 mit einer Raman-Spektroskopieeinrichtung 30 mit mindestens einem Gasvermessungsraum 20, 56 für das Gas 22 oder das Gasgemisch 24, der ein oder mehrere optische Zugänge 28 (siehe Figuren 1 und 2) und ein oder mehrere optische Ausgänge 30 aufweist, mit einer Gaszufuhrleitung 4, zur kontinuierlichen Zuführung von Messgas zu dem Gasvermessungsraum 20, 56 (siehe Figuren 1 und 2) während der Konzentrationsmessung, wobei diese Raman-Spektroskopieeinrichtung 30 einen in Figur 3 nicht gezeigten Hochleistungslaser 14, insbesondere eine Laserdiode 16 umfasst, welcher zur fokussierten Beleuchtung des Gases 22 oder des Gasgemisches 24 in dem mindestens einen in den Figuren 1 und 2 gezeigten Gasvermessungsraum 20, 56 ausgebildet ist und wobei die Raman-Spektroskopieeinrichtung 30 Raman-Streulicht 34, 62 durch ein sammelndes optisches System 36 mit Filtern und Blenden einer spektralen Analyseeinheit 38 zuführt (siehe Figuren 1 und 2), wobei die Messeinrichtung 10 zum Messen von im Infraroten Spektralbereich inaktiven Gasen 22 ausgebildet ist.

Wie in Figur 3 dargestellt, weist die Messeinrichtung 10 erfindungsgemäß eine separate Spurengasmesseinrichtung 2 zum Messen von wenigstens einem Spurengas auf. Der Gasfluss erfolgt wie im Stand der Technik durch eine Gaszufuhrleitung 4, wobei das Gas 22 in Figur 3 zuerst die Spurengasmesseinrichtung 2 und anschließend die Raman-SpektroskopieEinrichtung 30 anströmt, da die Spurengasmesseinrichtung 2 und die Raman-Spektroskopieeinrichtung 30 in Figur 3 in Reihe geschaltet sind. Der Gaszufluss über die Gaszufuhrleitung 4 erfolgt gemäß einer in Figur 3 gezeigten Gasflussrichtung 3. Die Spurengasmesseinrichtung 2 kann, wie bereits ausgeführt, auf einem optischen Prinzip wie Fluoreszenzerkennung oder auf einem nicht-optischen Prinzip wie elektrochemischer oder resistiver Detektion des gewählten Spurengases basieren. Die Kontrolleinrichtung 9 ist sowohl mit der Spurengasmesseinrichtung 2 als auch mit der Raman-Spektroskopieeinrichtung 30 verbunden. Die Kontrolleinrichtung 9 ist darüber hinaus mit der Leuchtanzeige 6 und der Aktorik 5 verbunden, wobei die Aktorik 5 die Gaszufuhr aktiviert oder abstellt und wobei die Leuchtanzeige 6 dazu dient, diesen Zustand mittels einer Anzeige visuell darzustellen. Nach dem Anströmen der Raman-Spektroskopieeinrichtung 30 verlässt das Gas 22 die Messeinrichtung 10 in Gasflussrichtung 3.

In den Figuren ist ferner gezeigt, dass das Gas 22 in einer Gasflussrichtung 3 in den Gasvermessungsraum 20, 56 eintritt und dass die Spurengasmesseinrichtung 2 der Raman-Spektroskopieeinrichtung 30 in Gasflussrichtung 3 vorgeschaltet ist.

Als alternative Ausführungsform zu Figur 3 ist in Figur 4 dargestellt, dass die Spurengasmesseinrichtung 2 auch separat von der Raman-Spektroskopieeinrichtung 30 anströmbar ist. Wie in Figur 4 gezeigt, sind in diesem Fall die Spurengasmesseinrichtung 2 und die Raman-Spektroskopieeinrichtung 30 in Gasflussrichtung 3 parallel angeordnet und können deswegen entweder separat angeströmt oder alternativ auch gleichzeitig parallel angeströmt werden.

Wie in den Figuren ferner dargestellt, kann die Messeinrichtung 10 eine Gaszufuhrleitung 4 zum Zuführen von Gaszufuhr in den Gasvermessungsraum 20, 56 und eine Aktorik 5 zum Abstellen der Gaszufuhr durch die Gaszufuhrleitung 4 und eine Aktorik 5 zum Anzeigen einer Warnung auf einer Leuchtanzeige 6 bei Überschreiten eines kritischen Schwellenwertes des wenigstens einen Spurengases 1 aufweisen. Dabei kann die Aktorik 5 zum Abstellen der Gaszufuhr durch die Gaszufuhrleitung 4 und/oder zum Anzeigen einer Warnung auf einer Leuchtanzeige 6 bei Detektion einer vorbestimmten Änderung des Gases 22 ausgebildet sein.

Dabei kann die Messeinrichtung 10 eine Auswerteeinheit zum Plausibilisieren und/oder Umschalten und/oder Korrigieren der folgenden beiden Messvorgänge aufweisen: Die Messeinrichtung 10 kann zum Messen von Raman-aktiven Hauptkomponenten, beispielsweise mit >0,5 Vol.% Anteil in der Gasmischung 22 und zum Messen der Konzentration von wenigstens einem Spurengas 1, beispielsweise mit 5 ppm Vol.% Anteil in der Gasmischung, mittels des speziell hierfür bereit gestelltem Spurengasdetektors ausgebildet sein.

Die Messeinrichtung 10 kann eine Regelungseinheit zum Auswählen unterschiedlicher Modi zum Messen der Konzentration des wenigstens einem Spurengas 1 aufweisen. Die Regelungseinheit kann dabei so ausgebildet sein, dass diese die Modi anhand von prozessbedingten Änderungen der Gaszufuhr durch die Gaszufuhrleitung 4 auswählen kann. Die Regelungseinheit kann ferner dazu ausgebildet sein, das Messen der Konzentration des wenigstens einen Spurengases 1 anhand einer Veränderung in der Zusammensetzung des Gases 22 zu aktivieren oder deaktivieren.

Die Messeinrichtung 10 kann ein lernfähiges neuronales Netzwerk zum Messen des Schwellenwertes des wenigstens einen Spurengases 1 aufweisen. Dabei kann das lernfähige neuronale Netzwerk zum Unterscheiden von wenigstens zwei einander ähnlichen Spurengasen 1 ausgebildet sein. Das lernfähige neuronale Netzwerk kann ferner zum Erkennen von Prozessveränderungen anhand der Unterschiede der wenigstens zwei einander ähnlichen Spurengasen 1 ausgebildet sein. Darüber hinaus kann das lernfähige neuronale Netzwerk zum Unterscheiden von verschiedenen Kohlenwasserstoffen bei Gasen 22 in inerter und/oder oxidierender Atmosphäre ausgebildet sein.

Wie in den Figuren gezeigt kann die Messeinrichtung 10 eine Kontrolleinrichtung 9 zum Plausibilisieren der ermittelten Messdaten aufweisen.

Ferner kann die Spurengasmesseinrichtung 2 dazu ausgebildet sein sensitiv auf Konzentrationen >1ppm von Schwefel und/oder Phosphor und/oder Ammoniak und/oder flüchtige primäre, sekundäre, tertiäre Amine und/oder freie Halogene und/oder Halogenoxide und/oder Ozon und/oder Kohlenmonoxid oder andere reduzierende Gase zu reagieren.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Messeinrichtung (10) für eine Konzentrationsmessung eines Gases (22) oder eines Gasgemischs (24) mit einer Raman-Spektroskopieeinrichtung (30) mit mindestens einem Gasvermessungsraum (20, 56) für das Gas (22) oder das Gasgemisch (24), der ein oder mehrere optische Zugänge (28) und ein oder mehrere optische Ausgänge (30) aufweist, mit einer Gaszufuhrleitung (4) zur kontinuierlichen Zuführung des Gases (22) oder Gasgemisches (24) in den Gasvermessungsraum (20, 56) während der Konzentrationsmessung, wobei diese Raman-Spektroskopieeinrichtung (30) einen Hochleistungslaser (14), insbesondere eine Laserdiode (16) umfasst, welcher zur fokussierten Beleuchtung des Gases (22) oder des Gasgemisches (24) in dem mindestens einen Gasvermessungsraum (20, 56) ausgebildet ist, und wobei die Raman-Spektroskopieeinrichtung (30) Raman-Streulicht (34, 62) durch ein sammelndes optisches System (36) mit Filtern und Blenden einer spektralen Analyseeinheit (38) zuführt, wobei die die Messeinrichtung zum Messen von Gasen ausgebildet ist,
**dadurch gekennzeichnet,**
**dass** die Messeinrichtung (10) zum Messen der Konzentration eines Spurengases (1) eine separate Spurengasmesseinrichtung (2) zum Messen von wenigstens einem Spurengas aufweist.

2. Messeinrichtung (10) gemäß Anspruch 1, **dadurch gekennzeichnet, dass** das Gas (22) in einer Gasflussrichtung (3) durch die Gaszuführleitung (4) in den Gasvermessungsraum (20, 56) eintritt und dass die Spurengasmesseinrichtung (2) der Raman-Spektroskopieeinrichtung (30) in Gasflussrichtung (3) stromaufwärts vorgeschaltet ist.

3. Messeinrichtung (10) gemäß Anspruch 1, **dadurch gekennzeichnet, dass** die Spurengasmesseinrichtung (2) separat von der Raman-Spektroskopieeinrichtung (30) anströmbar ist.

4. Messeinrichtung (10) gemäß Anspruch 1 oder 3, **dadurch gekennzeichnet, dass** die Spurengasmesseinrichtung (2) und die Raman-Spektroskopieeinrichtung (30) in Gasflussrichtung (3) fluidisch parallel angeordnet sind.

5. Messeinrichtung (10) gemäß einem der vorhergehenden Ansprüche, **dadurch gekennzeichnet, dass** die Spurengasmesseinrichtung (2) zum Unterscheiden von Kohlenwasserstoffen ausgebildet ist.

6. Messeinrichtung (10) gemäß einem der vorhergehenden Ansprüche, **dadurch gekennzeichnet, dass** die Spurengasmesseinrichtung (2) zur Detektion von Kohlenmonoxid ausgebildet ist.

7. Messeinrichtung (10) gemäß einem der vorhergehenden Ansprüche, **dadurch gekennzeichnet, dass** die Messeinrichtung (10) eine Aktorik (5) zum Abstellen der Gaszufuhr durch die Gaszufuhrleitung (4) und/oder eine Aktorik (5) zur Ausgabe einer Warnung, z.B. Anzeige auf einer Leuchtanzeige (6), bei Überschreiten eines vorbestimmten Schwellenwertes des wenigstens einen Spurengases (1) aufweist.

8. Messeinrichtung (10) gemäß einem der vorhergehenden Ansprüche, **dadurch gekennzeichnet, dass** die Messeinrichtung (10) eine Kontrolleinrichtung (9) zum Plausibilisieren der ermittelten Messdaten aufweist, wobei die Kontrolleinrichtung (9) eine Aktorik (5) zum Abstellen der Gaszufuhr durch die Gaszufuhrleitung (4) und/oder eine Aktorik (5) zum Anzeigen einer Warnung auf einer Leuchtanzeige (6) bei Detektion einer vorbestimmten Änderung der Zusammensetzung des Gases (22) aufweist.

9. Messeinrichtung (10) gemäß einem der vorhergehenden Ansprüche, **dadurch gekennzeichnet, dass** die Messeinrichtung (10) eine Auswerteeinheit (7) zum Plausibilisieren und/oder Umschalten und/oder Korrigieren der beiden Messvorgänge aufweist:
- Messen von Raman-aktiven Hauptkomponenten, beispielsweise mit >0,5 Vol.% Anteil in der Gasmischung 22
- Messen der Konzentration von wenigstens einem Spurengas 1, beispielsweise mit 5 ppm Vol.% Anteil in der Gasmischung, mittels des speziell hierfür bereit gestelltem Spurengasdetektors.

10. Messeinrichtung (10) gemäß einem der vorhergehenden Ansprüche, **dadurch gekennzeichnet, dass** die Messeinrichtung (10) eine Regelungseinheit (8) zum Auswählen unterschiedlicher Modi zum Messen des Schwellenwertes des wenigstens einem Spurengas (1) aufweist.

11. Messeinrichtung (10) gemäß Anspruch 10, **dadurch gekennzeichnet, dass** die Regelungseinheit (8) dazu ausgebildet ist, die Modi anhand von prozessbedingten Änderungen der Gaszufuhrleitung (4) auszuwählen.

12. Messeinrichtung (10) gemäß einem der Ansprüche 10 oder 11, **dadurch gekennzeichnet, dass** die Regelungseinheit (8) dazu ausgebildet ist, das Messen des Schwellenwertes des wenigstens einen Spurengases (1) anhand einer Veränderung in der Zusammensetzung des Gases (22) zu aktivieren oder deaktivieren.

13. Messeinrichtung (10) gemäß einem der vorhergehenden Ansprüche, **dadurch gekennzeichnet, dass** die Messeinrichtung (10) ein lernfähiges neuronales Netzwerk zum Messen des Schwellenwertes des wenigstens einen Spurengases (1) aufweist.

14. Messeinrichtung (10) gemäß Anspruch 13, **dadurch gekennzeichnet, dass** das lernfähige neuronale Netzwerk zum Unterscheiden von wenigstens zwei einander ähnlichen Spurengasen (1) ausgebildet ist.

15. Messeinrichtung (10) gemäß Anspruch 13 oder 14 **dadurch gekennzeichnet, dass** das lernfähige neuronale Netzwerk zum Erkennen von Prozessveränderungen anhand der Unterschiede der wenigstens zwei einander ähnlichen Spurengasen (1) ausgebildet ist.

16. Messeinrichtung (10) gemäß einem der Ansprüche 13-15, **dadurch gekennzeichnet, dass** das lernfähige neuronale Netzwerk zum Unterscheiden von verschiedenen Kohlenwasserstoffen bei Gasen (22) und/oder Spurengasen (1) ausgebildet ist.

17. Messeinrichtung (10) nach einem der vorhergehenden Ansprüche, **dadurch gekennzeichnet, dass** die Spurengasmesseinrichtung (2) eine Empfindlichkeit von 10 ppm oder darunter zur Messung der Stoffe Schwefel und/oder Phosphor und/oder Ammoniak und/oder zur Messung von flüchtigen primären, sekundären und/oder tertiären Aminen und/oder freien Halogenen und/oder Halogenoxiden und/oder von Ozon und/oder zur Messung von reduzierenden Gasen aufweist.

18. Messeinrichtung (10) nach einem der vorhergehenden Ansprüche, **dadurch gekennzeichnet, dass** die Spurengasmesseinrichtung (2) als ein beta-Strahlungszähler ausgebildet ist.

19. Messeinrichtung (10) nach Anspruch 18, **dadurch gekennzeichnet, dass** die Messeinrichtung (10) eine mit dem beta-Strahlungszähler verbundene Sicherheitsaktorik aufweist.

20. Verfahren zum Betreiben einer Messeinrichtung (10), insbesondere nach einem der vorhergehenden Ansprüche, wobei in einem ersten Schritt eine Grundkalibrierung der Messeinrichtung (10) erfolgt,
wobei in einem zweiten Schritt eine Nullgaskalibrierung, vorzugsweise mit Argon, erfolgt,
wobei in einem dritten Schritt ein Kalibriergasgemisch, vorzugsweise reiner Stickstoff, vermessen wird,
wobei in einem vierten Schritt die Messeinrichtung (10) zum Messen einer Gasmischung verwendet wird,
wobei in einem fünften Schritt ein lernfähiges neuronales Netzwerk zum Ausgeben eines Ergebnisses des in Schritt 4 gemessenen Gasmischung zum Einsatz kommt, **dadurch gekennzeichnet,**
**dass** nach dem ersten Schritt eine Grundkalibrierung eines Spurengas-Detektors erfolgt,
**dass** nach dem zweiten Schritt eine Nullgaskalibrierung des Spurengasdetektors erfolgt,
**dass** sowohl nach dem dritten als auch nach dem vierten Schritt eine Signalauswertung des Spurengas-Detektors erfolgt.
